# EUROPÄISCHE PATENTSCHRIFT

(11) **EP 0 846 878 B1**
(45) Veröffentlichungstag und Bekanntmachung des Hinweises auf die Patenterteilung: **21.03.2001**
(21) Anmeldenummer: 97119590.4
(22) Anmeldetag: 08.11.1997
(51) Int. Cl.: F16B 37/14, E04F 13/08, B25B 33/00

(54) **Dämmstoffhalter**
Insulating material fixing means
Fixation pour matériau isolant

(30) Priorität: 09.12.1996 DE 19651046
(43) Veröffentlichungstag der Anmeldung: 10.06.1998
(73) Patentinhaber: fischerwerke Artur Fischer GmbH & Co. KG, 72178 Waldachtal (DE)
(72) Erfinder: Frischmann, Albert, 79341 Kenzingen (DE); Semmler, Markus, Dipl.-Ing. (FH), 79312 Emmendingen (DE)

(56) Entgegenhaltungen:
- DE-A- 3 639 838
- DE-A- 4 329 806
- DE-U- 9 103 388
- US-A- 5 101 698

## Beschreibung

Die Erfindung betrifft einen Dämmstoffhalter mit einem Halteteller gemäß der Gattung des Anspruchs 1, wie aus der DE-U-9103388 bekannt.

Aus der 37 17 429 C2 ist Ferner ein Dämmstoffhalter mit einem Hohlschaft bekannt, der an seinem äußeren Ende einen flachen Halteteller und an seinem inneren Ende einen geschlitzten Spreizbereich aufweist. Zur Befestigung einer Dämmstoffplatte wird der Dämmstoffhalter in ein vorbereitetes Bohrloch eingeschoben und mittels eines Spreizstiftes aus Metall aufgespreizt. Danach wird auf die Dämmstoffplatte eine dünne Schicht einer Mörtelmasse aufgebracht.

Um ein Eindringen von Putz in den Hohlraum zu verhindern, weist der bekannte Dämmstoffhalter einen Deckel auf, der am Halteteller angebracht ist. Der Deckel wird in eine Ausnehmung des Haltetellers soweit eingeschwenkt, bis sein Rand auf der Schulterfläche der Ausnehmung aufsitzt. Der Deckel überdeckt dabei die Stirnfläche des Dämmstoffhalters und somit die Öffnung des den Spreizstift aufnehmenden Hohlschaftes.

Der Deckel ist als flache runde Scheibe mit einem schmalen Rand ausgebildet. Die Verbindung zum Halteteller erfolgt über einen Arm, der auf der Unterseite mit Schnapphaken versehen ist. Beim Auftragen des Mörtels kann sowohl in die den Deckel aufnehmende Ausnehmung als auch in den Schnapphaken Mörtel eindringen, der zu einem Abheben des Deckels wegen fehlender Fixierung führt. Damit ist weder ein ordnungsgemäßer Verschluß des Hohlschaftes noch eine glatte, das Abziehen der Putzschicht ermöglichende Außenfläche erreichbar.

Der Erfindung liegt daher die Aufgabe zugrunde, einen eine kontrollierte Verankerung des Dämmstoffhalters in der Tragschale ermöglichenden Dämmstoffhalter zu schaffen, der einfach und problemlos montierbar ist und kein Kältebrücke bildet, wobei aber die Schraube vor Korrosion geschützt werden soll.

Die Lösung dieser Aufgabe wird durch einen Dämmstoffhalter mit den Merkmalen des Anspruchs 1 erreicht.

Das erfindungsgemäß als Verschlußstopfen ausgebildete Kunststoffelement wird zum Verschluß des Hohlschaftes direkt in den die Schraube aufnehmenden Hohlraum des Dämmstoffhalters mindestens soweit eingedrückt, bis der Verschlußstopfen bündig mit der Außenfläche des Haltetellers ist. Durch einen geringfügig größeren Außendurchmesser des Verschlußstopfens gegenüber dem Durchmesser des Hohlraumes wird eine Klemmung erreicht, die den Verschlußstopfen im Hohlschaft fest fixiert. Durch die im Verschlußstopfen vorgesehene axiale Durchbrechung, wird nun erfindungsgemäß eine Entlüftung und durch Luftaustausch eine Reduzierung der Luftfeuchtigkeit im Hohlraum des Dämmstoffhalters erreicht, die die aus Metall bestehende Schraube vor Korrosion schützt.

Es ist zweckmäßig, das Kunststoffelement - wenigstens abschnittsweise - kugelförmig auszuführen. Damit wird eine die Montage erleichternde Zentrierung beim Einstecken des Verschlußstopfens in den Hohlraum des Dämmstoffhalters erreicht. Ferner ist keine exakte axiale Orientierung für den Verschlußstopfen erforderlich.

Der Verschlußstopfen kann über einen Spritzfaden mit dem Halteteller unverlierbar und als weitere Montageerleichterung verbunden sein.

Die axiale Durchbrechung des Verschlußstopfens kann entweder als durchgehende zentral angeordnete Öffnung oder durch eine oder mehrere auf der Mantelfläche des Verschlußstopfens angeordneten Kerben gebildet sein. In beiden Fällen ergibt sich dadurch auch eine erhöhte Formelastizität, die das Verklemmen des Verschlußstopfens im Hohlraum des Dämmstoffhalters verbessert.

Schließlich kann zum Eintreiben der Schraube in den Spreizbereich des Dämmstoffhalters ein Setzwerkzeug verwendet werden, das an seinem Schaft mit einem Anschlagbund versehen ist, der in einem Abstand zu der in die Schraube eingreifenden Stirnfläche des Setzwerkzeuges angeordnet ist. Beim Eindrehen der Schraube mit Hilfe des Setzwerkzeuges kommt der Anschlagbund auf der Außenfläche des Haltetellers zur Anlage. Dadurch wird das Setzwerkzeug nach der ordnungsgemäßen Montage des Dämmstoffhalters zwangsweise außer Eingriff mit der Schraube gebracht. Durch an der Unterseite des Anschlagbundes angebrachten Profilierungen wird gleichzeitig im Halteteller eine umlaufende Riege erzeugt, die dem Monteur als Sichtkontrolle für die ordnungsgemäße Verankerung des Dämmstoffhalters dient.

Das Setzwerkzeug ermöglicht auch das Tiefersetzen der Schraube und damit die Verwendung von Schrauben, deren Länge geringer ist als die Gesamtlänge des Dämmstoffhalters. Die Unterseite der eingesetzten Schraube ist konkav ausgebildet. Dies bietet den Vorteil, daß die am Dübel angreifende Zugkraft, die über den Schraubenkopf in den Befestigungsuntergrund abgeleitet wird, nicht mehr im rechten Winkel angreift und somit die Bestrebung hat, den Dübel aufzuweiten, sondern die Kraft auf den Schraubenschaft leitet, der nun das Gegenlager für die eingeleitete Kraft bildet.

Die Erfindung wird nachfolgend anhand von in der Zeichnung dargestellten Ausführungsbeispielen erläutert:
- Figur 1: Dämmstoffhalter im Schnitt
- Figur 2: Verschlußstopfen im Schnitt
- Figur 2a, b, c: weitere Ausführungsformen des Verschlußstopfens nach Figur 2
- Figur 3: Dämmstoffhalter mit Setzwerkzeug im Schnitt
- Figur 4: Dämmstoffhalter im montierten Zustand
- Figur 5: vergrößerte Darstellung des Schraubenkopfes

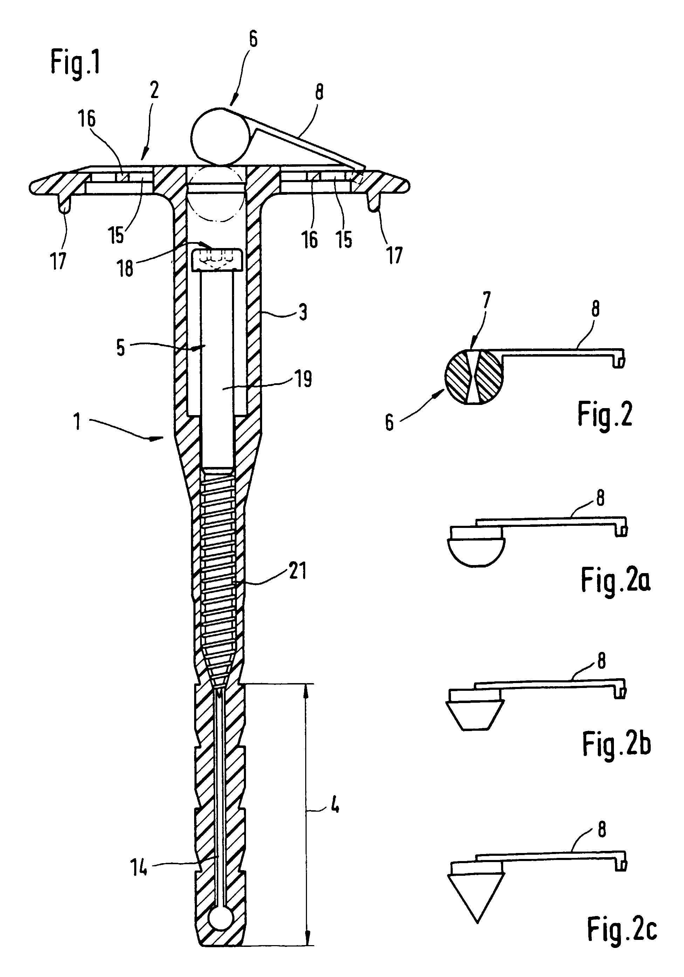

Der in Figur 1 dargestellte und vorzugsweise aus Kunststoff hergestellte Dämmstoffhalter 1 besteht aus einem flachen Halteteller 2 und einem daran anschließenden Hohlschaft 3 mit einem zylindrischen Außendurchmesser, der anschließend eine verengte Form annimmt. Im Hohlschaft 3 befindet sich eine Schraube 5, die mit einem Schraubenkopf 18 versehen ist und einen glatten 19 und profilierten 21 Schaft aufweist. An dem dem Halteteller gegenüberliegenden Ende weist der Hohlschaft 3 einen Schlitz 14 auf und bildet einen Spreizbereich 4. Um die Putzhaftung zu verbessern, ist der Halteteller 2 mit Durchbrüchen 15 und Stegen 16 versehen. Die Unterseite des Halteteliers ist mit Drehsperrelementen 17 versehen. An der Stirnseite des Haltetellers 2 ist ein zum Verschluß des Hohlschaftes dienender Verschlußstopfen 6 angebracht. Der Verschlußstopfen ist abschnittsweise kugelförmig ausgebildet und ist mit dem Halteteller 2 über einen Spritzfaden 8 verbunden.

Der in Figur 2 dargestellte Verschlußstopfen 6 ist mit einer durchgehenden zentralen Öffnung 7 versehen. Um Materialkosten zu sparen, ist es auch möglich, ein halbkugelförmiger, wie in Figur 2a, oder trapezförmiger, nach Figur 2b, Verschlußstopfen 6 einzusetzen. Mit einem in Figur 2c dargestellten Verschlußstopfen wird eine besonders leichte Zentrierung des Verschlußstopfens 6 im Hohlschaft 3 erreicht.

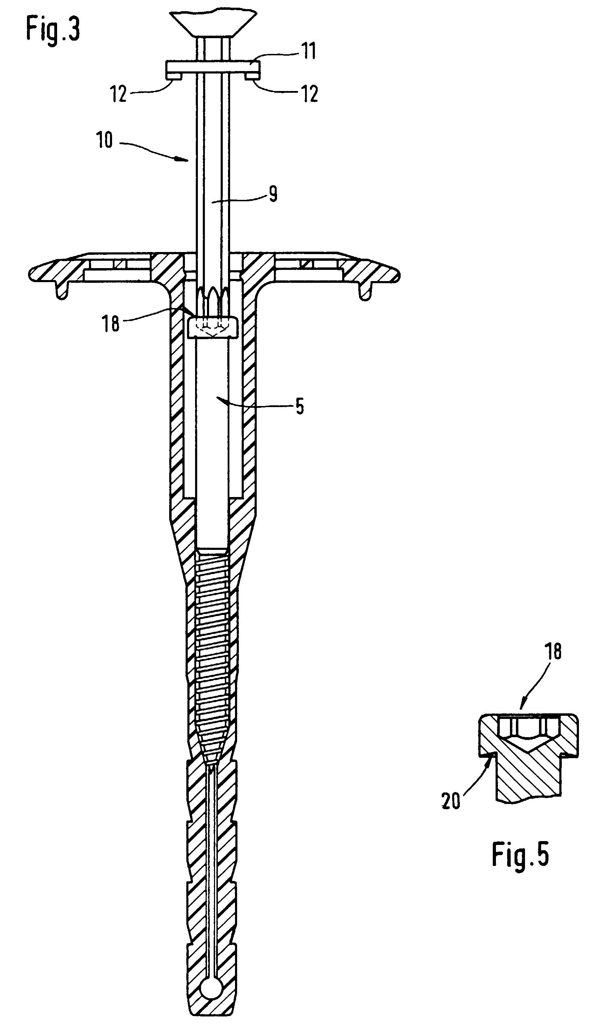

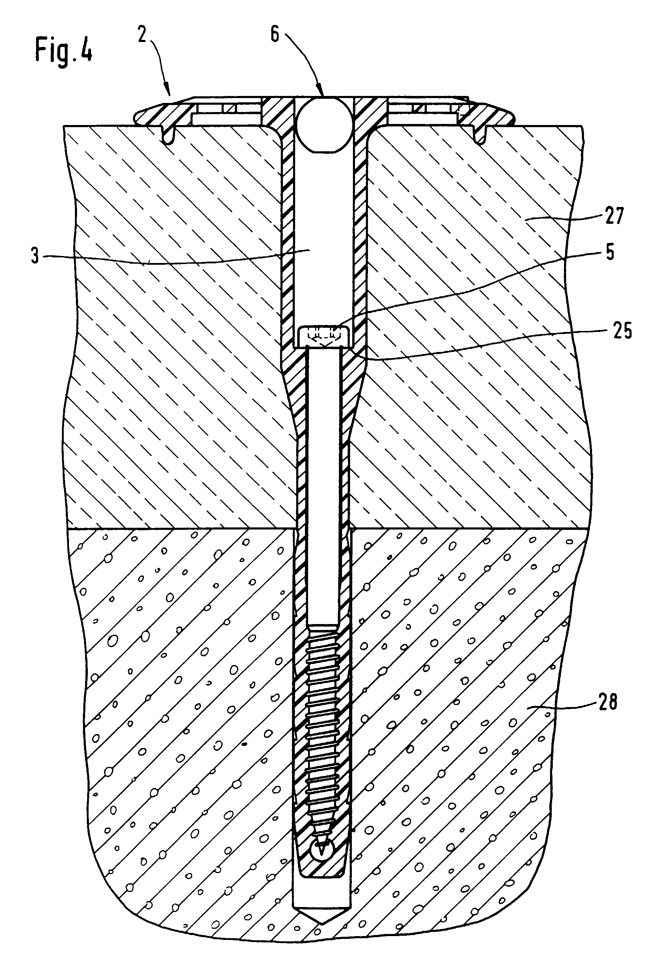

Das in Figur 3 dargestellte Setzwerkzeug 10 zum Eintreiben der Schraube 5 in den Dämmstoffhalter weist an seinem Schaft 9 einen Anschlagbund 11 auf, der in einem Abstand zu der Stirnfläche des Setzwerkzeuges angeordnet ist. Die Unterseite des Anschlagbundes 11 ist mit Profilierungen 12 versehen. Während des Setzens der Schraube in den Dämmstoffhalter greift das Setzwerkzeug in den Schraubenkopf 18 ein und transportiert die Schraube in Richtung der Tragschale 28 bis die Schraube 5 an der Schulter 25 anliegt. Dabei wird der geschlitzte Bereich des Dämmstoffhalters aufgeweitet und der Halteteller 2 mit der Dämmstoffplatte 27 verspannt. Gleichzeitig liegt der Verschlußstopfen 6 in dem Hohlschaft 3 bündig mit der Außenfläche des Haltetellers, wie die Figur 4 darstellt, und schließt den Hohlraum ab. Die spezielle Form des Schraubenkopfes 18 ist in Figur 5 dargestellt. Wie ersichtlich, ist die Unterseite 20 der Schraube 5 konkav ausgebildet.

## Patentansprüche

1. Dämmstoffhalter (1) mit einem Halteteller (2) und einem die Dämmstoffplatte durchdringenden, mit einem Kunststoffelement verschließbaren Hohlschaft (3) mit einem Hohlraum, an den sich ein geschlitzter Spreizbereich (4) anschließt, der durch Eintreiben einer Schraube (5) zur Verankerung des Dämmstoffhalters in einem Bohrloch eines Mauerwerks aufspreizbar ist, wobei das Kunststoffelement als in den Hohlschaft (3) passender und darin verklemmbarer Verschlußstopfen (6) ausgebildet ist, **dadurch gekennzeichnet**, daß der Verschlußstopfen (6) wenigstens eine axiale Durchbrechung (7) aufweist, die nach dem Einbreingen der Schraube eine Entküftung der die Schraube enthaltenden Hohlraumes ermöglicht.

2. Dämmstoffhalter nach Anspruch 1, **dadurch gekennzeichnet**, daß der Verschlußstopfen (6) zumindest abschnittsweise kugelförmig ausgebildet ist.

3. Dämmstoffhalter nach Anspruch 1, **dadurch gekennzeichnet,** daß der Verschlußstopfen (6) mit dem Halteteller (2) über einen Spritzfaden (8) verbunden ist.

4. Dämmstoffhalter nach Anspruch 1, **dadurch gekennzeichnet,** daß die axiale Durchbrechung (7) als durchgehende zentrale Öffnung im Verschlußstopfen (6) ausgebildet ist.

5. Dämmstoffhalter nach Anspruch 1, **dadurch gekennzeichnet**, daß die axiale Durchbrechung (7) durch auf der Mantelfläche des Verschlußstopfens angeordnete Kerben gebildet ist.

## Claims

1. An insulation fixing means (1) having a retaining plate (2) and, for passing through the insulation panel, a hollow shank (3) with a cavity, the hollow shank being closable by means of a plastics material element and having adjoining it a slotted expansion region (4), which, to anchor the insulation fixing means in a hole drilled in masonry, is expandable by driving in a screw (5), wherein the plastics material element is in the form of a closure stopper (6) that fits into the hollow shank (3) and is wedgeable therein, characterised in that the closure stopper (6) has at least one axial through-opening (7), which permits ventilation of the cavity containing the screw after the screw has been introduced.

2. An insulation fixing means according to claim 1, characterised in that the closure stopper (6) is of spherical construction at least in part.

3. An insulation fixing means according to claim 1, characterised in that the closure stopper (6) is connected to the retaining plate (2) by way of an extruded filament (8).

4. An insulation fixing means according to claim 1, characterised in that the axial through-opening (7) is in the form of a continuous central opening in the closure stopper (6).

5. An insulation fixing means according to claim 1, characterised in that the axial through-opening (7) is formed by notches arranged on the outer surface of the closure stopper.

## Revendications

1. Fixation pour matériau isolant (1) comprenant un disque de fixation (2) et une tige creuse (3) comportant une partie creuse qui traverse la plaque de matériau isolant, qui peut être fermée par un élément en matière plastique et que prolonge une zone à expansion fendue (4) pouvant être déployée en y enfonçant une vis (5) destinée à fixer la fixation pour matériau isolant dans un perçage d'un ouvrage de maçonnerie, sachant que l'élément en matière plastique est réalisé en tant que bouchon (6) aux dimensions de la tige creuse (3) et pouvant y être immobilisé, caractérisée en ce que le bouchon (6) présente au moins un passage axial (7) qui, après mise en place de la vis, permet une aération de la partie creuse renfermant la vis.

2. Fixation pour matériau isolant selon la revendication 1, caractérisée en ce qu'au moins certaines parties du bouchon (6) sont sphériques.

3. Fixation pour matériau isolant selon la revendication 1, caractérisée en ce que le bouchon (6) est relié au disque de fixation (2) par l'intermédiaire d'une attache moulée par injection (8).

4. Fixation pour matériau isolant selon la revendication 1, caractérisée en ce que le passage axial (7) est réalisé en tant qu'ouverture centrale traversante dans le bouchon (6).

5. Fixation pour matériau isolant selon la revendication 1, caractérisée en ce que le passage axial (7) est formé par des encoches disposées sur la surface latérale du bouchon.
